# EUROPEAN PATENT APPLICATION

(11) **EP 1 785 051 A1**
(43) Date of publication of application: **16.05.2007**
(21) Application number: 06023586.8
(22) Date of filing: 13.11.2006
(51) Int. Cl.: A44B 18/00

(54) **Touch fastener components carrying indicia, and methods of making the same**

(30) Priority: 15.11.2005 US 280035
(71) Applicant: VELCRO INDUSTRIES B.V., Curacao (AN)
(72) Inventor: Clarner, Mark A., Concord New Hampshire 03301 (US); Hinton, Kristel Ferry, Methuen, MA 01844 (US); Clune, William P., Hillsborough, NH 03244 (US)
(74) Representative: Müller-Boré & Partner Patentanwälte

(57) **Abstract**

Touch fastener components (10,130) include a sheet-form base (12,101) and an array of touch fastener elements (14,120,240) on an engaging side (16) of the sheet-form base. Each touch fastener element (14,120,240) includes a stem (13,250) extending outwardly from the sheet-form base (12,101) and an engageable head (15,110,242,246) extending from a distal end of the stem. The touch fastener components carry indicia (I), e.g., molded indicia, on a surface thereof, the indicia (I) including features (14,120,240) smaller than the touch fastener elements and visible from the engaging side (16) of the sheet-form base.

## Description

### TECHNICAL FIELD

This disclosure generally relates to touch fastener components carrying indicia, and to methods of making the same.

### BACKGROUND

Early male touch fastener products were generally woven materials, with hooks being formed by cutting filament loops. More recently, arrays of small fastener elements have been formed by molding the fastener elements, or at least the stems of the elements, to form an interconnected sheet of material. It is often difficult to ascertain a source of a fastener just by looking at the product.

### SUMMARY

Generally, the disclosure relates to touch fastener components carrying indicia, e.g., molded indicia, and to methods of making the same.

In one aspect, the disclosure features touch fastener components that include a sheet-form base and an array of touch fastener elements on an engaging side of the sheet-form base. Each touch fastener element includes a stem extending outwardly from the sheet-form base and an engageable head extending from a distal end of the stem. The touch fastener component carries molded indicia on a surface thereof, the molded indicia including features smaller than the touch fastener elements and visible from the engaging side of the sheet-form base.

In some implementations, the touch fastener element stems are integral with the sheet-form base.

The indicia can be, e.g., in the form of molded projections extending outwardly from the surface of the touch fastener component. For example, in such instances, the molded projections can extend outwardly from the surface a maximum distance of less than 0.0010 inch (0.025 mm), measured perpendicular to the surface in a direction of extension.

The indicia can be, e.g., in the form of small cavities or recesses extending inwardly from the surface into the fastener component. For example, in such instances, the recesses can extend inwardly from the surface a maximum distance of less than 0.0010 inch (0.025 mm), measured perpendicular to the surface in a direction of extension.

The indicia can be, e.g., carried on sides of the touch fastener elements and/or carried on a sheet-form base surface from which the fastener element stems extend.

In some implementations, each fastener element has two heads extending in substantially opposite directions. In other implementations, that touch fastener elements are in the form of a hook, e.g., a J-style hook.

The engageable head and stem of each fastener element can, e.g., together form a unitary molded structure. The engageable head can have, e.g., a surface of resin evidencing having been cooled against a mold surface.

In a specific implementation, each engageable head includes multiple, discrete engaging prongs, and the indicia extend from a distal surface of at least some of the engaging prongs.

In some embodiments, each fastener element has an overall height, measured perpendicular to the sheet-form base in a direction of extension, of between 0.0050 inch (0.13 mm) and 0.10 inch (2.5 mm). The fastener elements can be, e.g., arranged in a density of at least 100 fastener elements per square inch (15.50 fastener elements per square centimeter). If desired, lateral sides of each fastener element can be, e.g., substantially parallel.

If desired, the touch fastener components can, e.g., further include a backing material laminated to a non-engaging side of the sheet-form base opposite the touch fastener elements. Such implementations can be advantageous when it is desired to attach, e.g., by stitching or sewing, the touch fastener components on a garment.

The indicia can be, e.g., disposed between adjacent rows of touch fastener elements and/or disposed between fastener elements in a given row or rows.

In some implementations, indicia are configured to indicate a source of goods, text, and/or graphics.

In another aspect, the disclosure features methods of a making touch fastener components having a sheet-form base and an array of fastener elements extending therefrom. The methods include forming from a resin an array of fastener elements with stems extending outwardly from an engaging side of a sheet-form base and forming indicia on a surface of the touch fastener, the indicia including features that are smaller than the fastener elements and that are visible from the engaging side of the sheet-form base.

In some implementations, the indicia are formed by molding the resin. The indicia can be, e.g., formed as the fastener elements are formed of the resin.

In some embodiments, the indicia are formed by being marked on a surface of the formed touch fastener. For example, marking can be accomplished by using a printer, e.g., an inkjet printer, or by a laser, e.g., a CO₂ laser.

Any of the methods described herein can be, e.g., performed in a continuous process to produce a lengthwise-continuous fastener tape.

In some embodiments, the stems of the fastener elements are formed in cavities extending inwardly from a peripheral surface of a rotating mold roll. For example, the rotating mold roll can be adjacent a counter-rotating pressure roll. In some implementations, the forming of the fastener elements and the forming of the indicia are performed by introducing molten resin to the peripheral surface of the rotating mold roll; applying sufficient pressure to force the resin into the cavities to mold the fastener element stems, while forming the sheet-form base of resin on the peripheral surface of the mold roll; cooling the resin in the cavities; and then stripping the sheet-form base from the peripheral surface of the mold roll, thereby pulling the molded fastener element stems formed in the cavities from their respective cavities. The mold roll includes indicia-forming features on a surface thereof, the indicia-forming features being configured to form the indicia on the surface on the engaging side of the sheet-form base. In such implementations, the indicia-forming features can be, e.g., in the form of recesses extending inwardly from the peripheral surface of the mold roll. The mold roll cavities can be shaped to form releasably engageable fastener elements. Such implementations can further include deforming terminal ends of the molded fastener element stems between a conforming roll and a supporting roll to form engageable heads that overhang sides of the stems. If desired, the conforming roll can, e.g., include indicia-forming features on a surface thereof, the indicia-forming features being configured to form the indicia on the heads.

Aspects and/or implementations may have one or more of the following advantages. Indicia can provide useful information about the touch fastener component, e.g., its source, or the material from which it is formed. Indicia indicating the source of goods can make it easier to ascertain the authenticity of a product carrying the indicia. Indicia can also indicate the date in which the fastener component was produced, and from which apparatus, e.g., mold, they were produced, making the product more traceable with respect to geographic location and date of manufacture.

Other features and advantages of the disclosure will be apparent from the following detailed description, and from the claims.

### DESCRIPTION OF DRAWINGS

Fig. 1 is a perspective view of a portion of a male touch fastener carrying indicia.
Fig. 1A is a highly enlarged perspective view of a hook having indicia on a side surface.
Fig. 1B is a cross-sectional view of the hook of Fig. 1A, taken along 1B-1B.
Fig. 2 is a schematic side view of a method for making the male touch fastener of Fig. 1 and others.
Fig. 3 is a highly enlarged perspective view of several mold rings having indicia-forming features.
Fig. 4 is a side view of an alternative process for making the male touch fastener of Fig. 1 and others.
Fig. 5 is a perspective view of a castellated preform carrying indicia on a side surface.
Fig. 6 is a side view of an apparatus for forming engageable heads on distal ends of the castellated perform of Fig. 5 and others.
Fig. 6A is a perspective view of a portion of a conforming roll having indicia-forming features.
Fig. 7 is a top view of a portion of a male touch fastener having discrete engageable prongs made by deforming distal ends of castellated performs.
Fig. 7A is an enlarged top view of a touch fastener element having engaging prongs which carry indicia on a top surface thereof.
Fig. 8 is a perspective view of a palm tree hook carrying indicia extending on a side surface.

### DETAILED DESCRIPTION

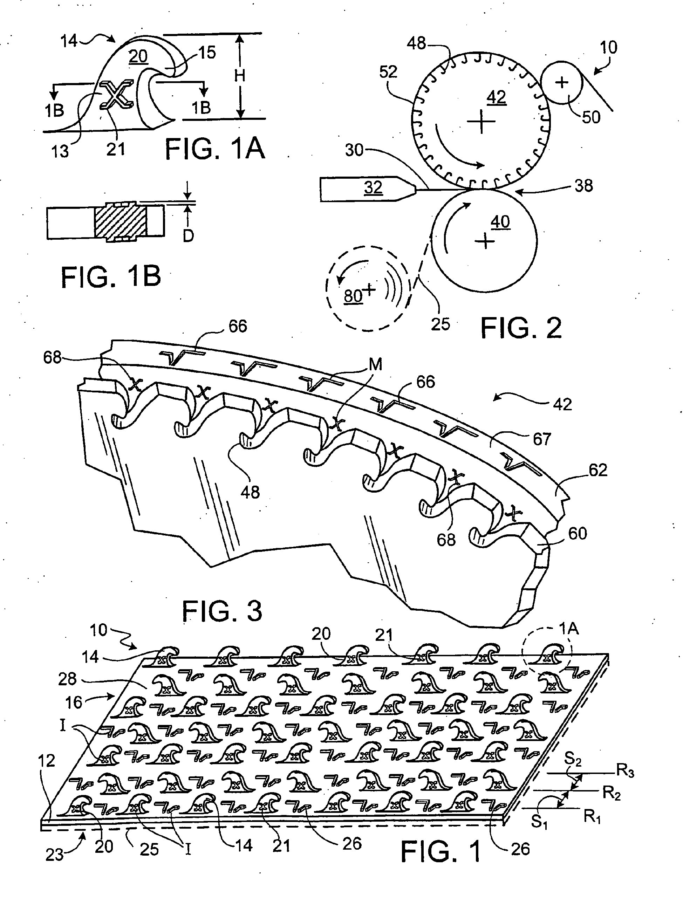

Referring to Figs. 1, 1A and 1B, a male touch fastener 10 includes a sheet-form base 12 and an array of molded male touch fastener elements 14 on an engaging side 16 of the sheet-form base 12. Each touch fastener element 14 includes a stem 13 extending outwardly from and integral with the sheet-form base 12 and an engageable head 15 extending from a distal end of the stem. The touch fastener 10 carries indicia *I* on a surface thereof that are visible from the engaging side 16 of the sheet-form base 12. Generally, the indicia include features that are smaller than the touch fastener elements. As shown, the male touch fastener elements 14 are arranged in rows R₁, R₂, R₃, ... R_{N}, with a spacing S₁, S₂ ... S_{N-1} between adjacent rows. In the particular implementation shown, some of the indicia *I* are sized to fit between adjacent rows of touch fastener elements that are in the shape of J-hooks, each hook having lateral sides that are substantially parallel. Also as shown, the engageable side of each head in a particular row, e.g., R₁, faces a single direction, the direction being substantially opposite in adjacent rows, e.g., R₁ and R₂.

Generally the indicia *I* provide useful information. For example, the indicia can provide information about a touch fastener product, e.g., its source, the material from which it is made, the date it was made, molds from which the fastener was produced, and/or the geographic location of production. Indicia *I* indicating the source of goods are often advantageous because they make it easier to ascertain the authenticity of a product. In some implementations, the indicia *I* are arranged to define text (e.g., words and/or numbers), or graphics (e.g., logos and/or pictograms). In specific implementations, the text identifies a mold number, a production date, or a geographic location of production.

The indicia *I* can, e.g., be molded. In such instances, the indicia I can be in the form of molded projections 21 extending outwardly from a lateral side 20 of each fastener element 14, or in the form of molded projections 26 extending outwardly from a top surface 28 of the sheet-form base 12. In such implementations, the molded projections 21 and/or 26 can extend outwardly from their respective surface, e.g., a maximum distance D (Fig. 1B) of less than 0.0010 inch (0.025 mm), less than 0.0005 inch (0.013 mm), or less than 0.00025 inch (0.0064 mm), measured perpendicular to the surface in the direction of extension.

In some embodiments, the fastener elements are arranged in a density of at least 100 fastener elements per square inch (15.50 fastener elements per square centimeter), e.g., more that 500, more than 750, more than 1500, more than 2500, or more than 5000 fastener elements per square inch (77.50, 116.24, 232.49, 387.48, or more than 774.95 fastener elements per square centimeter, respectively). Any of these embodiments can have less than 7000 fastener elements per square inch (1085.00 fastener elements per square centimeter).

The fastener elements can extend a distance H (Fig. 1B) from the sheet-form of, e.g., less than 0.10 inch (2.54 mm), less than 0.050 inch (1.27 mm), less than 0.030 inch (0.76 mm), less than 0.020 inch (0.51 mm), or less than 0.010 inch (0.25 mm), measured perpendicular to the sheet-form base from the top surface 28 to a maximum extension of the head above the sheet-form base 12.

In some implementations, it is desirable for the fastener component to have a backing material 25 laminated to a non-engaging side 23 of the sheet-form base 12 opposite the touch fastener elements. This can be useful, e.g., when it is to be fastened to an article of clothing.

Generally, the touch fastener components can be made by forming from a resin, e.g., a thermoplastic resin, an array of fastener elements with stems extending outwardly from an engaging side of a sheet-form base and forming indicia, e.g., by marking or molding, on a surface of the touch fastener. The indicia include features that are smaller than the fastener elements and that are visible from the engaging side of the sheet-form base.

Referring also now to Figs. 2 and 3, touch fastener 10 can be made, e.g., by extruding thermoplastic resin in the form of a sheet 30 from an extruder 32 and introducing the sheet 30 into a nip 38 formed between a pressure roll 40 and a counter-rotating mold roll 42 that defines fastener element-shaped cavities 48 that extend inwardly from its surface 52. Mold roll 42 includes indicia-forming features *M* that extend inwardly from a surface, e.g., an outer surface (like indicia-forming features 66) or inner surface (like indicia-forming features 68). Pressure in the nip 38 causes the resin to enter the fastener element shaped forming cavities 48 and the indicia-forming features *M,* respectively, to form fastener elements 14 and indicia *I.* The thermoplastic resin is cooled as it proceeds along the periphery of the mold roll 42, solidifying the fastener elements 14. The touch fastener 10 is stripped from the mold 42 by stripper roll 50.

In such implementations, the mold roll 42 includes a face-to-face assembly of thin, circular plates or rings that are, e.g., 0.003 inch to 0.250 inch (0.0762 mm-6.35 mm) thick, some rings 60 having cutouts in their periphery which define mold cavities and other rings 62 serving to close the open sides of the mold cavities and serve as spacers, defining the spacing (discussed above) between adjacent fastener element rows. Rings 62 have indicia-forming features *M* that extend inwardly from a surface thereof. A fully "built up" mold roll can have a width, e.g., from 0.75 inch to about 6 inches (1.91 cm-15.24 cm) or more, and can have, e.g., from about 50 to 1000 or more individual rings.

When the indicia *I* are in the form of molded projections 21 extending outwardly from a side 20 of each fastener element 14, the corresponding indicia-forming features *M* are relatively shallow cavities or recesses extending inwardly from a side surface of rings 62. When the indicia *I* are in the form of molded projections 26 extending outwardly from the top surface 28 of the sheet-form base 12, the corresponding indicia-forming features *M* are relatively shallow cavities or recesses extending inwardly from a peripheral surface 67 of the rings 62. The relatively shallow inwardly extending indicia-forming features can be made by a variety of techniques, e.g., machining (e.g., computer-assisted machining), or engraving (e.g., computer-assisted engraving or laser engraving).

The thermoplastic resin can be, e.g., a polyolefin (e.g., a polyethylene or a polypropylene), a polyester (e.g., polyethylene terephthalate), or a polyamide (e.g., nylon 6, 6/12 or 6/10). It is often desirable to use a relatively low viscosity resin so as to fully replicate the indicia-forming features. For example, when a polyolefin is used, it is often desirable that the polyolefin have a melt flow rate that is, e.g., greater than 5.0 g/10 minutes (e.g., greater than 10.0 g/10 minutes, greater than 15.0, greater than 20.0, greater than 25.0, greater than 30.0, or even greater than 50.0 g/10 minutes), measured using ASTM D1238, 230 °C/2.16 kg. In specific implementations, the resin is a 50:50 weight percent blend of a 20 melt flow rate (MFR) polypropylene and a 50 MFR polypropylene. Polypropylenes are available from Sunoco Chemical.

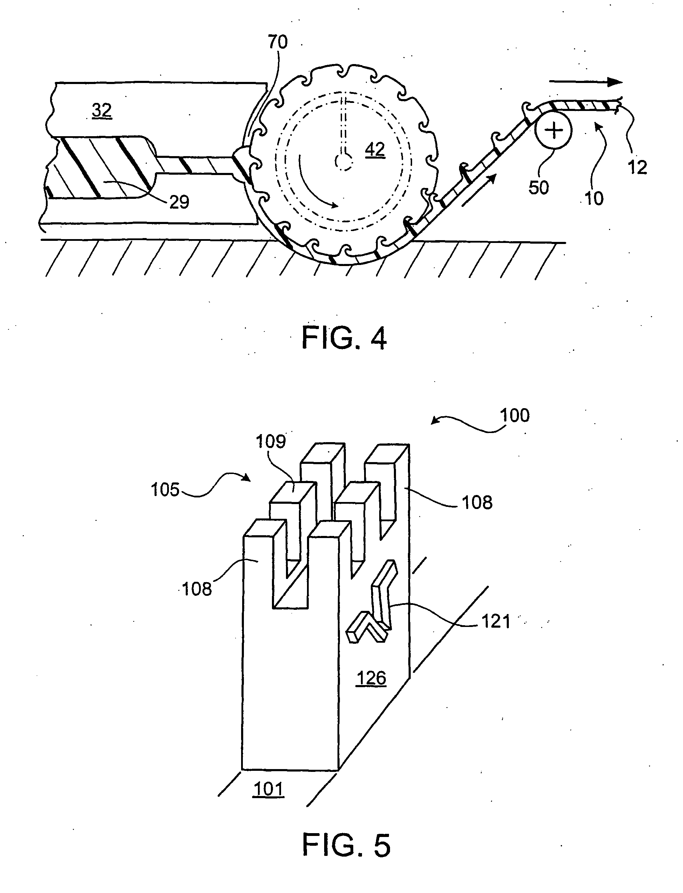

An alternate technique for molding touch fasteners carrying indicia I is shown in Fig. 4. The process is similar to that described above with reference to Fig. 2 and 3, except only a mold roll 42 is used, i.e., no pressure roll' 40 is necessary. Here, the extruder 32 is shaped to conform to the periphery of the mold roll and the molten resin 29 is introduced under pressure directly to a gap 70 formed between mold roll 42 and extruder 32. The molded touch fastener is stripped from the mold cavities by a stripper roll 50, as described above.

Referring back now to Figs. 1 and 2, a laminated male touch fastener can be formed by introducing a backing material 25 from a supply 80 into the nip 38, along with the resin. The heat and pressure in the nip 38 aids in the bonding of the backing material 25 to the resin 29, while the fastener elements and indicia *I* are formed. The result can be a contiguous molded structure, without weld lines. In one useful implementation, backing material 25 is a loose knit scrim, such as Knit 3901 from Velcro USA in Manchester, New Hampshire, although Velcro USA loop products 3900, 3905, and 3400 can also be employed. Knit 3901 is a 2 bar Tricot knit nylon fabric which generally must be brushed or napped before it can be employed as the functioning loop of a hook and loop closure. However, it has been found to function well as a reinforcement when at least partially encapsulated by, or bonded to, the base resin contiguous with the resin forming the hooks, without brushing or napping. Reinforcing the base with such a scrim can, e.g., improve the stitch tear strength of the product, providing a resin-base fastener product practical for attachment by stitching.

In some cases, the fastener elements are not molded in their final form. Referring to Fig. 5, straight-sided thermoformable preform member 100 extends upwardly from and is continuous with a base layer 101. A distal end 105 of member 100 defines a plurality of parallel upwardly directed prongs 108 extending to respective terminal ends 109. In this particular implementation, the prongs have no overhang of the base, and all side surfaces of the stems and prongs are parallel (except for a small draft angle). As shown, indicia *I* in the form of molded projections 121 extend outwardly from a side 126 of member 100. In the particular implementation shown, there is a 2 by 3 pattern of upwardly directed prongs, each prong having in transverse cross-section (parallel to the base) that is rectangular.

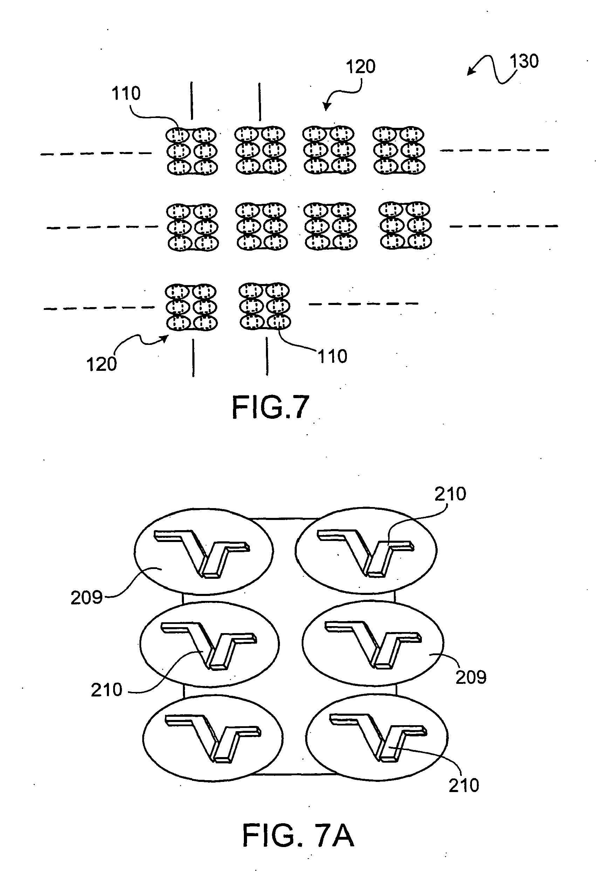

Referring now to Fig. 7, from this pronged preform member 100, fastener elements 120 having six discrete heads 110 can be formed by the application of appropriate heat and pressure to the terminal ends 109 of prongs 108. If desired, heat and pressure can be applied such that the six discrete heads coalesce to form one relatively large head at the distal end 105 of member 100 (not shown). A large array of the fastener elements 120 form a sheet-form fastener product 130.

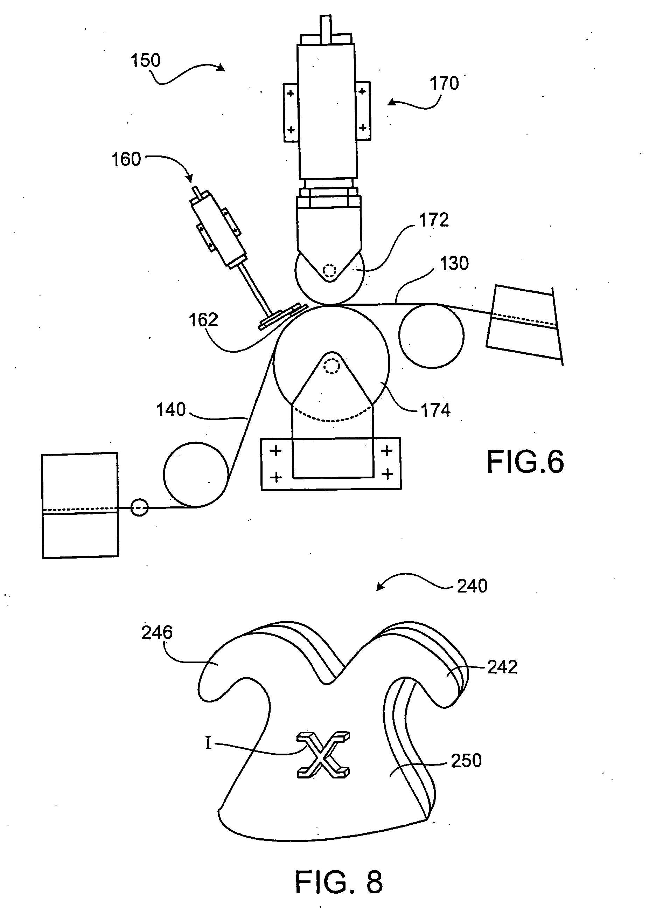

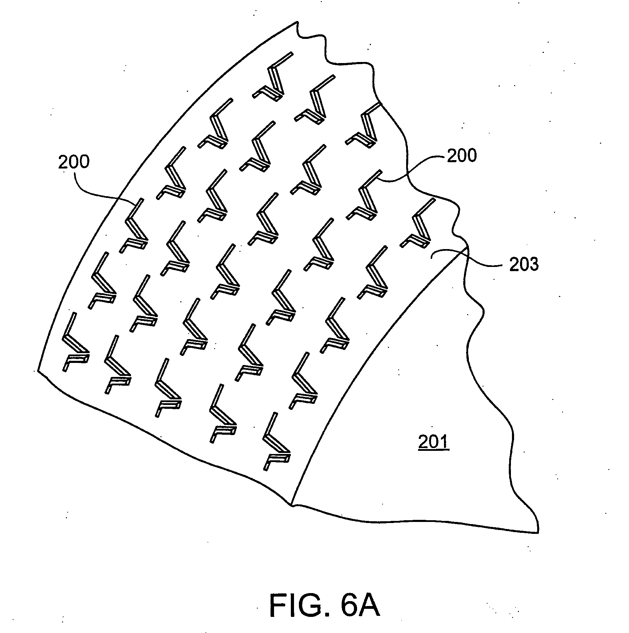

Referring now as well to Fig. 6, in some implementations, sheet-form fastener 130 can be formed in an apparatus 150 by passing a preform sheet 140 that includes an array of members 100 under a heating device 160, which heats the distal ends 105 of members 100. In some implementations, the heating device 160 include a non-contact heat source 162 that is capable of quickly elevating the temperature of resin that is very close to the heat source without raising the temperature of material that is relatively further away from the heat source. Non-contact heat sources include, e.g., flame heaters, electrically heated nichrome wire, and radiant heater blocks. After distal ends 105 of members 100 have been heated, preform sheet 140 moves to conformation station 170, at which time base sheet 140 passes between conformation roll 172 and drive roll 174. Conformation roll 172 forms the prongs into a desired shape, while drive roll 174 advances the sheet material.

In some implementations, conformation roll 172 is a smooth cylindrical roll, so that upon deformation of the distal ends 109 of each prong 108, a substantially flat upper surface is formed (as in Fig. 7). Referring now to Figs. 6A and 7A, in some implementations, a conformation roll 201 can define a plurality of indicia-forming features in the form of shallow cavities or recesses 200 that extend inwardly from a peripheral surface 203. Pressure between conformation roll 201 and drive roll 174 (Fig. 6) causes the molten thermoplastic resin at distal ends of prongs to enter the shallow cavities or recesses 200 to form indicia in the form of projections 210 that extend outwardly from each head 209.

A number of implementations have been disclosed. Nevertheless, it will be understood that various modifications may be made without departing from the spirit and scope of the disclosure.

For example, while implementations have been shown in which hooks are in the shape of a J, in some implementations, the hooks are palm tree-shaped hooks 240 (Fig. 8), which have two heads 242 and 246 extending from a single stem 250, and, thus, are engageable in two directions.

While implementations have been shown in which a single stem has six discrete heads (Fig. 7), in other implementations, a single stem has one head, two heads, three heads, four heads or more than six heads, e.g. 10 discrete heads.

While implementations have been shown in which hooks have lateral sides that are substantially parallel, in the implementation shown in Fig. 8, the lateral sides are not parallel.

While implementations have been shown in which indicia-forming features extend inwardly from a surface, in some implementations, they extend outwardly from a surface, providing indicia I in the form of cavities or recesses which extend inwardly from a surface of a fastener. Such outwardly extending indicia-forming features can, e.g., be made by electroforming.

While implementations have been shown in which fastener components are molded, in some implementations, the fastener components are formed by other processes. For example, fasteners can be made by profile extruding hook-shaped rails; cutting or severing the hook-shaped rails to form discrete elements; stretching the cut rails to increase separation between the discrete elements. In such instances, indicia can be formed by marking the resulting material, e.g., by scoring.

While implementations have been shown in which the indicia are molded, in some implementations, the indicia are formed by marking on a surface of the formed touch fastener. For example, the indicia can be formed by using a laser to melt or ablate material to form the indicia, or by using a printer, e.g., an inkjet printer to form the indicia. A suitable inkjet printer is the Spectra Nova-AAA printing module having 256 independently addressable jets that is capable of operation of up to 600 dpi is available from Spectra, Inc., Hanover, NH. Laser marking systems are available from Universal Laser Systems, Inc., Scottsdale, Arizona (USA), and Epilog Laser, Golden, Colorado (USA).

Accordingly, other embodiments are within the scope of the following claims.

## Claims

1. A touch fastener component (10,130) comprising:
a sheet-form base (12,101); and
an array of touch fastener elements (14,120,240) on an engaging side (16) of the sheet-form base (12,101), each touch fastener element comprising,
a stem (13,250) extending outwardly from the sheet-form base (12,101), and
an engageable head (15,110,242,246) extending from a distal end of the stem,
wherein the touch fastener component carries molded indicia (I) on a surface thereof, the molded indicia including features smaller than the touch fastener elements (14,120,240) and visible from the engaging side (16) of the sheet-form base.

2. The touch fastener component of claim 1, wherein the touch fastener element stems (13,250) are integral with the sheet-form base (12,101).

3. The touch fastener of claim 1 or 2, wherein the indicia (I) are in the form of molded projections (21,121) extending outwardly from the surface of the touch fastener component.

4. The touch fastener component of claim 3, wherein the molded projections (21,121) extend outwardly from the surface a maximum distance of less than 0.0010 inch (0.025 mm), measured perpendicular to the surface in a direction of extension.

5. The touch fastener of claim 1 or 2, wherein the indicia (I) are in the form of recesses extending inwardly from the surface into the fastener component.

6. The touch fastener component of claim 5, wherein the recesses extend inwardly from the surface a maximum distance of less than 0.0010 inch (0.025 mm), measured perpendicular to the surface in a direction of extension.

7. The touch fastener component of any one of the above claims, wherein the indicia (I) are carried on sides (20,126) of the touch fastener elements (14,120,240).

8. The touch fastener component of any one of claims 1-6, wherein the indicia (I) are carried on a sheet-form base surface (28) from which the fastener element stems (14,120,240) extend.

9. The touch fastener of any one of the above claims, wherein each fastener element (240) has two heads (242,246) extending in substantially opposite directions.

10. The touch fastener component of any one of the above claims, wherein each touch fastener element (14,240) is in the form of a hook.

11. The touch fastener component of any one of the above claims, wherein the engageable head (15,110,242,246) and stem of each fastener element (14,120,240) together form a unitary molded structure.

12. The touch fastener component of any one of the above claims, wherein the engageable head (15,110,242,246) has a surface of resin evidencing having been cooled against a mold surface.

13. The touch fastener component of any one of claims 1-4, wherein each engageable head (110) comprises multiple, discrete engaging prongs, and wherein the indicia (I) extend from a distal surface (209) of each engaging prong.

14. The touch fastener component of any one of the above claims, wherein each fastener element has an overall height, measured perpendicular to the sheet-form base in a direction of extension, of between 0.0050 inch (0.13 mm) and 0.10 inch (2.5 mm).

15. The touch fastener component of any one of the above claims, wherein the fastener elements (14,120,240) are arranged in a density of at least 100 fastener elements per square inch (15.50 fastener elements per square centimeter).

16. The touch fastener component of any one of the above claims, further comprising a backing material (25) laminated to a non-engaging side (23) of the sheet-form base opposite the touch fastener elements (14).

17. The touch fastener component of any one of claims 1-6, 8-12 or 14-16, wherein the indicia (I) are disposed between adjacent rows (R₁,R₂,R₃) of touch fastener elements (14).

18. The touch fastener component of any one of the above claims, wherein the indicia (I) are configured to indicate a source of goods.

19. The touch fastener component of any one of the above claims, wherein the indicia (I) comprise text.

20. The touch fastener of component of any one of the above claims, wherein the indicia (I) define graphics.

21. The touch fastener component of any one of the above claims, wherein lateral sides (126) of each fastener element (120) are substantially parallel.

22. A method of a making a touch fastener component (10,130) having a sheet-form base (12,101) and an array of fastener elements (14,120,240) extending therefrom, the method comprising:
forming from a resin an array of fastener elements with stems (14,120,240) extending outwardly from an engaging side (16) of a sheet-form base (12,101); and
forming indicia (I) on a surface of the touch fastener (10,130), the indicia (I) including features (21,121) that are smaller than the fastener elements (14,120,240) and that are visible from the engaging side (16) of the sheet-form base (12,101).

23. The method of claim 22, wherein the indicia (I) are formed by being marked on a surface of the formed touch fastener.

24. The method of claim 22, wherein the indicia (I) are formed by molding the resin.

25. The method of claim 22, wherein the (I) indicia are formed as the fastener elements are formed of the resin.

26. The method of any one of claims 22-25, performed in a continuous process to produce a lengthwise-continuous fastener tape.

27. The method of claim 22, wherein the stems (13,250) of the fastener elements (14,120,240) are formed in cavities (48) extending inwardly from a peripheral surface (52) of a rotating mold roll (42).

28. The method of claim 27, wherein the rotating mold roll (42) is adjacent a counter-rotating pressure roll (40), the mold roll (42) and pressure roll (40) together defining a nip (38).

29. The method of claim 27, wherein the forming of the fastener elements (14,120,240) and the forming of the indicia (I) are performed by
introducing molten resin to the peripheral surface (52) of the rotating mold roll (42);
applying sufficient pressure to force the resin into the cavities (48) to mold the fastener element stems (13,250), while forming the sheet-form base (12,101) of resin on the peripheral surface (52) of the mold roll (42);
cooling the resin in the cavities (48); and then
stripping the sheet-form base from the peripheral surface (52) of the mold roll (52), thereby pulling the molded fastener element stems (13,250) formed in the cavities (48) from their respective cavities,
wherein the mold roll (42) includes indicia-forming features (66,68) on a surface thereof, the indicia-forming features being configured to form the indicia (I) on the surface on the engaging side (16) of the sheet-form base (12,101).

30. The method of claim 29, wherein the indicia-forming features (66) are in the form of recesses extending inwardly from the peripheral surface (52) of the mold roll (42).

31. The method of claim 29, wherein the mold roll cavities (48) are shaped to form releasably engageable fastener elements (14).

32. The method of claim 29, further comprising
deforming terminal ends (109) of the molded fastener element stems between a conforming roll (171) and a supporting roll (174) to form engageable heads that overhang sides of the stems.

33. The method of claim 32, wherein the conforming roll (172) includes indicia-forming features on a surface thereof, the indicia-forming features being configured to form the indicia (210) on the heads (110).
